# FASCICULE DE BREVET EUROPEEN

(11) **EP 3 224 890 B1**
(45) Date de publication et mention de la délivrance du brevet: **24.10.2018**
(21) Numéro de dépôt: 15801748.3
(22) Date de dépôt: 24.11.2015
(51) Int. Cl.: H01M 8/04

(54) **PROCÉDÉ DE PILOTAGE D'UNE PILE À COMBUSTIBLE ET SYSTÈME DE PILE À COMBUSTIBLE ASSOCIÉ**
STEUERVERFAHREN FÜR EINE BRENNSTOFFZELLE UND BRENNSTOFFZELLENSYSTEM
CONTROL PROCESS FOR A FUEL CELL AND FUEL CELL SYSTEM

(30) Priorité: 24.11.2014 FR 1461374
(43) Date de publication de la demande: 04.10.2017
(73) Titulaire: Areva Stockage d'Energie, 13547 Aix-en-Provence (FR)
(72) Inventeur: SWICA, Jérémy, 33450 Saint Sulpice et Cameyrac (FR); TALOIS, Julien, 13600 La Ciotat (FR)
(74) Mandataire: Lavoix
(86) Numéro de dépôt international: PCT/EP2015/077523
(87) Numéro de publication internationale: WO 2016/083388

(56) Documents cités:
- WO-A1-2011/089502
- DE-A1-102008 010 711
- JP-A- S59 111 270
- JP-A- 2010 103 075
- US-A1- 2008 038 608

## Description

La présente invention concerne un procédé de pilotage d'une pile à combustible, la pile à combustible comprenant au moins une cellule électrochimique pour la génération d'un courant électrique par réaction d'un fluide oxydant, circulant dans un compartiment cathodique de la pile à combustible, avec un fluide réducteur circulant dans un compartiment anodique de la pile à combustible, le procédé étant du type comprenant les étapes suivantes :
- mesure de la pression de fluide dans un premier compartiment parmi les compartiments anodique et cathodique,
- déduction d'une première pression cible pour la pression de fluide dans le deuxième compartiment, ladite première pression cible étant fonction de la pression de fluide mesurée dans le premier compartiment, et
- stabilisation de la pression de fluide dans le deuxième compartiment à la première pression cible,

L'invention concerne également un système de pile à combustible, du type comprenant :
- un compartiment cathodique,
- un compartiment anodique,
- au moins une cellule électrochimique pour la génération d'un courant électrique par réaction d'un fluide oxydant, circulant dans le compartiment cathodique, avec un fluide réducteur circulant dans le compartiment anodique,
- un premier capteur de pression, pour mesurer une pression de fluide dans un premier des compartiments anodique et cathodique,
- un premier régulateur de pression, pour réguler une pression de fluide dans le deuxième compartiment,
- un module de commande, comprenant :
   ∘ un premier module de déduction, pour déduire une première pression cible à partir de la pression mesurée par le premier capteur, et
   ∘ un premier module de génération, pour générer une première loi de commande du premier régulateur, adaptée pour stabiliser la pression de fluide dans le deuxième compartiment à la première pression cible,
- un deuxième capteur de pression, pour mesurer une pression de fluide le deuxième compartiment, et
- un deuxième régulateur de pression, pour réguler la pression de fluide dans le premier compartiment.

On connaît les cellules électrochimiques permettant de produire de l'électricité par réaction d'oxydoréduction entre un fluide oxydant et un fluide réducteur. Notamment, on connaît les cellules de pile à combustible permettant de produire de l'électricité par réaction d'oxydoréduction entre un combustible, comprenant de l'hydrogène, et un comburant, comprenant de l'oxygène. Le combustible est injecté dans un conduit anodique et le comburant est injecté dans un conduit cathodique de la cellule, une couche d'électrolyte assurant l'étanchéité entre ces deux conduits, en permettant les échanges d'ions. En raison de ces échanges d'ions, l'hydrogène contenu dans le combustible peut réagir avec l'oxygène contenu dans le comburant pour donner de l'eau, en générant des électrons à l'anode. Il s'ensuit, lors du fonctionnement de la cellule, l'établissement d'une différence de potentiel entre les deux côtés de l'électrolyte, cette différence de potentiel pouvant être exploitée pour créer un courant électrique.

Cependant, les différences de potentiel s'établissant au sein d'une cellule de pile à combustible restent faibles, de l'ordre de 0,6 à 1,0V. Aussi, pour obtenir une tension de sortie exploitable, les cellules sont le plus souvent empilées et raccordées électriquement en série les unes autres, au sein de ce qui est couramment appelé une pile à combustible. Les conduits anodiques des cellules électrochimiques sont raccordés fluidiquement les uns aux autres au sein de ce qui forme un compartiment anodique de la pile à combustible, et les conduits cathodiques des cellules électrochimiques sont raccordés fluidiquement les uns aux autres au sein de ce qui forme un compartiment cathodique de la pile à combustible.

Pour éviter d'endommager la couche d'électrolyte des cellules, il est nécessaire de limiter le différentiel de pression entre les compartiments anodique et cathodique. A cet effet, la pression de fluide dans l'un des compartiments anodique et cathodique est généralement pilotée en fonction de la pression de fluide dans l'autre compartiment, par exemple au moyen d'un détendeur.

WO 2011/083502 divulgue ainsi un procédé de pilotage d'une pile à combustible dans lequel la pression de fluide dans le compartiment cathodique est maintenue à une pression cible inférieure à une pression seuil dépendant de la pression dans le compartiment anodique, pour éviter la rupture des membranes des cellules.

Cependant, il arrive que la pression de fluide dans le compartiment servant de référence pour le pilotage de la pression de fluide dans l'autre compartiment augmente de manière incontrôlée. Cette augmentation incontrôlée de la pression de fluide dans la pile à combustible risquant fortement de l'endommager, il est nécessaire d'arrêter la pile à combustible. Il en résulte des sollicitations mécaniques répétées et non contrôlées des membranes des cellules, susceptibles de les endommager.

Un objectif de l'invention est de garantir une bonne durée de vie des couches électrolytes des cellules électrochimiques d'une pile à combustible, tout en limitant les arrêts de sécurité de la pile à combustible.

A cet effet, l'invention a pour objet un procédé de pilotage d'une pile à combustible du type précité, comprenant en outre les étapes suivantes :
- mesure de la pression de fluide dans le deuxième compartiment,
- déduction d'une deuxième pression cible pour la pression de fluide dans le premier compartiment, ladite deuxième pression cible étant fonction de la pression de fluide mesurée dans le deuxième compartiment, et
- stabilisation de la pression de fluide dans le premier compartiment à la deuxième pression cible.

Selon des modes particuliers de réalisation de l'invention, le procédé de pilotage présente l'une ou plusieurs des caractéristiques suivantes, prise(s) isolément ou suivant toute(s) combinaison(s) techniquement possible(s) :
- la stabilisation de la pression de fluide dans chaque compartiment est effectuée au moyen d'une vanne, par exemple d'une électrovanne,
- la première pression cible est égale à la somme de la pression de fluide mesurée dans le premier compartiment et d'une première constante, et la deuxième pression cible est égale à la somme de la pression de fluide mesurée dans le deuxième compartiment et d'une deuxième constante,
- le procédé de pilotage comprend les étapes suivantes :
   ∘ calcul d'une première différence de pression entre la pression de fluide dans le deuxième compartiment et la première pression cible,
   ∘ comparaison de la première différence de pression à un premier seuil, et
   ∘ en cas de dépassement du premier seuil par la première différence de pression, arrêt de la stabilisation de la pression de fluide dans le deuxième compartiment à la première pression cible, et démarrage de la stabilisation de la pression de fluide dans le premier compartiment à la deuxième pression cible,
- le procédé de pilotage comprend les étapes suivantes :
   ∘ calcul d'une deuxième différence de pression entre la pression de fluide dans le premier compartiment et la deuxième pression cible,
   ∘ comparaison de la deuxième différence de pression à un deuxième seuil, et
   ∘ en cas de dépassement du deuxième seuil par la deuxième différence de pression, arrêt de la stabilisation de la pression de fluide dans le premier compartiment à la deuxième pression cible, et démarrage de la stabilisation de la pression de fluide dans le deuxième compartiment à la première pression cible.

L'invention a également pour objet un système de pile à combustible du type précité, dans lequel le module de commande comprend en outre un deuxième module de déduction pour déduire de la pression mesurée par le deuxième capteur une deuxième pression cible, et un deuxième module de génération pour générer une deuxième loi de commande du deuxième régulateur de pression, adaptée pour stabiliser la pression de fluide dans le premier compartiment à la deuxième pression cible.

Selon des modes particuliers de réalisation de l'invention, le procédé de pilotage présente l'une ou plusieurs des caractéristiques suivantes, prise(s) isolément ou suivant toute(s) combinaison(s) techniquement possible(s) :
- chaque régulateur de pression est une vanne, par exemple une électrovanne,
- la première pression cible est égale à la somme de la pression de fluide mesurée par le premier capteur et d'une première constante, et la deuxième pression cible est égale à la somme de la pression de fluide mesurée par le deuxième capteur et d'une deuxième constante,
- le module de commande comprend :
   ∘ un premier module de calcul pour calculer une première différence de pression entre la pression de fluide mesurée par le deuxième capteur et la première pression cible,
   ∘ un premier module de comparaison pour comparer la première différence de pression à un premier seuil,
   ∘ un premier module d'arrêt, pour arrêter le premier module de génération en cas de dépassement du premier seuil par la première différence de pression, et
   ∘ un premier module de démarrage, pour démarrer le deuxième module de génération en cas de dépassement du premier seuil par la première différence de pression,
- le module de commande comprend :
   ∘ un deuxième module de calcul pour calculer une deuxième différence de pression entre la pression de fluide mesurée par le premier capteur et la deuxième pression cible,
   ∘ un deuxième module de comparaison pour comparer la deuxième différence de pression à un deuxième seuil,
   ∘ un deuxième module d'arrêt pour arrêter le deuxième module de génération en cas de dépassement du deuxième seuil par la deuxième différence de pression, et
   ∘ un deuxième module de démarrage, pour démarrer le premier module de génération en cas de dépassement du deuxième seuil par la deuxième différence de pression.

D'autres caractéristiques et avantages de l'invention apparaîtront à la lecture de la description qui va suivre, donnée uniquement à titre d'exemple et faite en se référant aux dessins annexés, dans lesquels :
- la Figure 1 est un schéma d'un système de pile à combustible selon l'invention, et
- la Figure 2 est une vue schématique en coupe d'une cellule électrochimique d'une pile du système de production de la Figure 1.

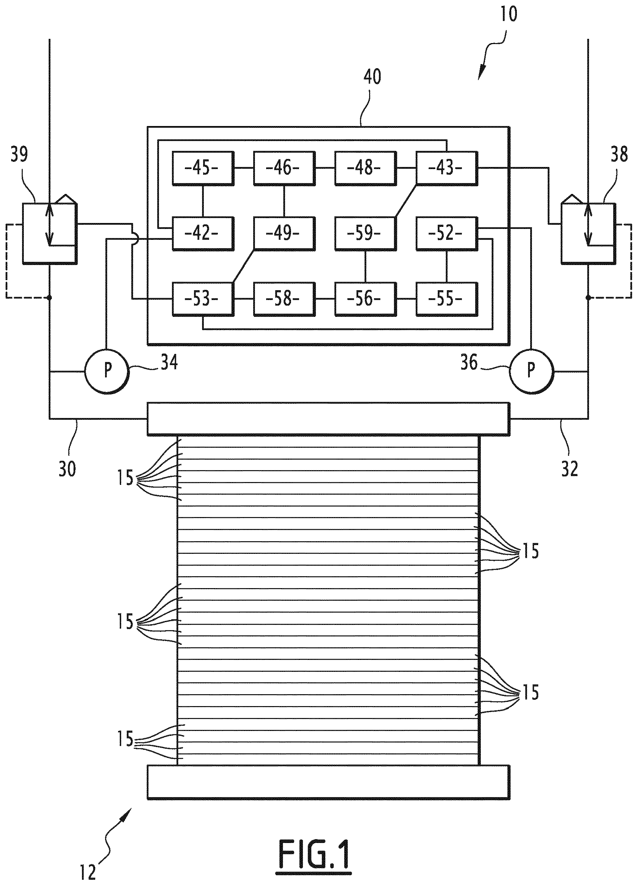

Le système de pile à combustible 10, représenté sur la Figure 1, comprend une pile à combustible 12 formée d'un empilement de cellules électrochimiques 15.

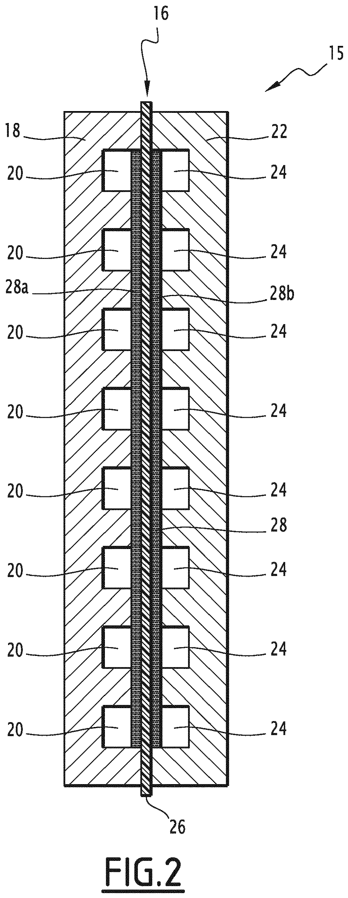

Une cellule 15 de la pile à combustible 12 est représentée sur la Figure 2. Elle comprend un assemblage membrane-électrode 16 intercalé entre une plaque anodique 18 et une plaque cathodique 22.

L'assemblage membrane-électrode 16 comprend une membrane 26 d'échange d'ions prise en sandwich entre une anode 28a et une cathode 28b.

La membrane 26 isole électriquement l'anode 28a de la cathode 28b.

La membrane 26 est adaptée pour ne laisser que des ions chargés, de préférence des cations, la traverser. La membrane 26 est généralement une membrane d'échange de protons, adaptée pour ne laisser que des protons la traverser. La membrane 26 est typiquement en matériau polymère.

L'anode 28a et la cathode 28b comprennent chacune un catalyseur, typiquement du platine ou un alliage de platine, pour faciliter la réaction.

La plaque anodique 18 délimite un conduit anodique 20 pour la circulation d'un gaz réducteur le long de l'anode 28a et en contact avec celle-ci. Pour ce faire, la plaque 18 est munie d'au moins un canal ménagé dans la face de la plaque tournée vers l'assemblage membrane-électrode 16 et refermé par ledit assemblage membrane électrode 16. La plaque anodique 18 est formée d'un matériau conducteur électriquement, typiquement du graphite. Le gaz réducteur utilisé est un gaz comprenant du dihydrogène, comme par exemple du dihydrogène pur.

La plaque cathodique 22 délimite un conduit cathodique 24 pour la circulation d'un gaz oxydant le long de la cathode 28b et en contact avec celle-ci. Pour ce faire, la plaque 22 est munie d'au moins un canal ménagé dans la face de la plaque tournée vers l'assemblage membrane-électrode 16 et refermé par ledit assemblage membrane électrode 16. La plaque cathodique 22 est formée d'un matériau conducteur électriquement, typiquement du graphite. Le gaz oxydant utilisé est un gaz comprenant du dioxygène, comme par exemple du dioxygène pur, de l'air, ou un mélange reconstitué de dioxygène et d'un gaz neutre, tel que de l'azote ou du dioxyde de carbone.

La membrane 26 sépare les gaz oxydant et réducteur. Elle est disposée entre la plaque anodique 18 et la plaque cathodique 22 de la cellule 15 et isole celles-ci électriquement l'une de l'autre.

L'anode 28a est en contact électrique avec la plaque anodique 18. La cathode 28b est en contact électrique avec la plaque cathodique 22. Lors du fonctionnement de la pile à combustible, il se produit au niveau de l'anode 28a une oxydation du gaz réducteur induisant la génération d'électrons et de protons. Les électrons transitent ensuite via la plaque anodique 18 vers la cathode 28b de la cellule 15, ou vers la cathode d'une autre cellule, pour participer à une réduction du gaz oxydant.

La cellule 15 comprend ainsi deux bornes électriques: une borne électrique négative est constituée par la plaque anodique 18, et une borne électrique positive est constituée par la plaque cathodique 22.

La cellule 15 est empilée avec d'autres cellules similaires, la plaque anodique 18 de chaque cellule étant en contact avec la plaque cathodique 22 de la cellule voisine. Les plaques anodique et cathodique 18, 22 assurent ainsi le transfert des électrons du gaz réducteur circulant dans une cellule vers le gaz oxydant circulant dans une autre cellule. Les plaques anodique 18 et cathodique 22 de deux cellules voisines de l'empilement sont de préférence venues de matière et forment ensemble une plaque bipolaire. Les conduits anodiques 20 des différentes cellules 15 de l'empilement sont raccordés fluidiquement les unes aux autres pour former un compartiment anodique (non représenté) de la pile 12, et les conduits cathodiques 24 des différentes cellules 15 de l'empilement sont raccordés fluidiquement les unes aux autres pour former un compartiment cathodique (non représenté) de la pile 12.

Le système de pile à combustible 10 comprend également un premier conduit 30 d'alimentation du compartiment anodique en fluide réducteur, un deuxième conduit 32 d'alimentation du compartiment cathodique en fluide oxydant, un premier capteur de pression 34, pour mesurer la pression de fluide dans le compartiment anodique, un deuxième capteur de pression 36, pour mesurer la pression de fluide dans le compartiment cathodique, un premier régulateur de pression 38, pour réguler la pression de fluide dans le compartiment cathodique, un deuxième régulateur de pression 39, pour réguler la pression de fluide dans le compartiment anodique, et un module 40 de commande des régulateurs de pression 38, 39.

Le premier conduit 30 est raccordé fluidiquement à une source de fluide réducteur (non représentée) et à une entrée de fluide du compartiment anodique de la pile à combustible 12.

Le deuxième conduit 32 est raccordé fluidiquement à une source de fluide oxydant (non représentée) et à une entrée de fluide du compartiment cathodique de la pile à combustible 12.

Le premier capteur 34 est adapté pour mesurer la pression de fluide dans le premier conduit 30, à proximité de l'entrée du compartiment anodique. On notera que, la pression de fluide dans le premier conduit 30 à proximité de l'entrée du compartiment anodique étant sensiblement égale à la pression de fluide dans le compartiment anodique, cela revient à mesurer la pression de fluide dans le compartiment anodique.

Le deuxième capteur 36 est adapté pour mesurer la pression de fluide dans le deuxième conduit 32, à proximité de l'entrée du compartiment cathodique. On notera que, la pression de fluide dans le deuxième conduit 32 à proximité de l'entrée du compartiment cathodique étant sensiblement égale à la pression de fluide dans le compartiment cathodique, cela revient à mesurer la pression de fluide dans le compartiment cathodique.

Le premier régulateur de pression 38 est branché sur le deuxième conduit 32, en amont du point de mesure de pression du deuxième capteur 36. Il est intercalé fluidiquement entre la source de fluide oxydant et l'entrée du compartiment cathodique. Le premier régulateur 38 est de préférence une vanne, par exemple une électrovanne.

Le deuxième régulateur de pression 39 est branché sur le premier conduit 30, en amont du point de mesure de pression du premier capteur 34. Il est intercalé fluidiquement entre la source de fluide réducteur et l'entrée du compartiment anodique. Le deuxième régulateur 39 est de préférence une vanne, par exemple une électrovanne.

Le module de commande 40 comprend un premier module de déduction 42, un premier module de génération 43, un premier module de calcul 45, un premier module de comparaison 46, un premier module d'arrêt 48, un premier module de démarrage 49, un deuxième module de déduction 52, un deuxième module de génération 53, un deuxième module de calcul 55, un deuxième module de comparaison 56, un deuxième module d'arrêt 58, et un deuxième module de démarrage 59.

Le premier module de déduction 42 est adapté pour déduire une première pression cible à partir de la pression mesurée par le premier capteur 34. Ladite première pression cible est par exemple égale à la somme de la pression de fluide mesurée par le premier capteur 34 avec une première constante. La première constante est par exemple comprise entre 1 et 500 mBar.

Le premier module de génération 44 est adapté pour générer une première loi de commande du premier régulateur 38, adaptée pour stabiliser la pression de fluide dans le deuxième compartiment à la première pression cible.

Le premier module de calcul 45 est adapté pour calculer une première différence de pression entre la pression de fluide mesurée par le deuxième capteur 36 et la première pression cible.

Le premier module de comparaison 46 est adapté pour comparer la première différence de pression à un premier seuil. Le premier seuil est par exemple compris entre 1 et 500 mBar.

Le premier module d'arrêt 48 est adapté pour arrêter le premier module de génération 43 en cas de dépassement du premier seuil par la première différence de pression.

Le premier module de démarrage 49 est adapté pour démarrer le deuxième module de génération 53 en cas de dépassement du premier seuil par la première différence de pression.

Le deuxième module de déduction 52 est adapté pour déduire une deuxième pression cible à partir de la pression mesurée par le deuxième capteur 36. Ladite deuxième pression cible est par exemple égale à la somme de la pression de fluide mesurée par le deuxième capteur 36 avec une deuxième constante. La deuxième constante est par exemple comprise entre 1 et 500 mBar.

Le deuxième module de génération 53 est adapté pour générer une deuxième loi de commande du deuxième régulateur 39, adaptée pour stabiliser la pression de fluide dans le premier compartiment à la deuxième pression cible.

Le deuxième module de calcul 55 est adapté pour calculer une deuxième différence de pression entre la pression de fluide mesurée par le premier capteur 34 et la deuxième pression cible.

Le deuxième module de comparaison 56 est adapté pour comparer la deuxième différence de pression à un deuxième seuil. Le deuxième seuil est par exemple compris entre 1 et 500 mBar.

Le deuxième module d'arrêt 58 est adapté pour arrêter le deuxième module de génération 53 en cas de dépassement du deuxième seuil par la deuxième différence de pression.

Le deuxième module de démarrage 59 est adapté pour démarrer le premier module de génération 43 en cas de dépassement du deuxième seuil par la deuxième différence de pression.

Un procédé de pilotage du système de pile à combustible 10 va maintenant être décrit, en référence à la Figure 1.

Initialement, la pression de fluide dans le compartiment cathodique est pilotée en fonction de la pression de fluide dans le compartiment anodique. A cet effet, la pression de fluide dans le compartiment anodique est mesurée par le premier capteur 34, la première pression cible est déduite par le premier module de déduction 42, et une loi de commande adaptée pour stabiliser la pression de fluide dans le compartiment cathodique à la première pression cible est générée par le premier module de génération 43. La pression de fluide dans le compartiment cathodique est alors stabilisée à la première pression cible par le premier régulateur de pression 38.

Dans le même temps, la première différence de pression entre la pression mesurée par le deuxième capteur 36 et la première pression cible est calculée par le premier module de calcul 45, et ladite première différence de pression est comparée au premier seuil par le module de comparaison 46.

En cas de dépassement du premier seuil par la première différence de pression, le premier module de comparaison 46 envoie un signal aux premiers modules d'arrêt 48 et de démarrage 49. Le premier module d'arrêt 48 commande alors l'arrêt du premier module de génération 43, et le premier module de démarrage 49 commande le démarrage du deuxième module de génération 53. La pression de fluide dans le compartiment cathodique cesse ainsi d'être stabilisée à la première pression cible, et la pression de fluide dans le compartiment anodique commence à être stabilisée à la deuxième pression cible par le deuxième régulateur de pression 39.

En particulier, suite au démarrage du deuxième module de génération 53, la pression de fluide dans le compartiment cathodique est mesurée par le deuxième capteur 36, la deuxième pression cible est déduite par le deuxième module de déduction 52, et une loi de commande adaptée pour stabiliser la pression de fluide dans le compartiment cathodique à la deuxième pression cible est générée par le deuxième module de génération 53.

Dans le même temps, la deuxième différence de pression entre la pression mesurée par le premier capteur 34 et la deuxième pression cible est calculée par le deuxième module de calcul 55, et ladite deuxième différence de pression est comparée au deuxième seuil par le module de comparaison 56.

En cas de dépassement du deuxième seuil par la deuxième différence de pression, le deuxième module de comparaison 56 envoie un signal aux deuxièmes modules d'arrêt 58 et de démarrage 59. Le deuxième module d'arrêt 48 commande alors l'arrêt du deuxième module de génération 53, et le deuxième module de démarrage 59 commande le démarrage du premier module de génération 43. La pression de fluide dans le compartiment anodique cesse ainsi d'être stabilisée à la deuxième pression cible, et la pression de fluide dans le compartiment cathodique recommence à être stabilisée à la première pression cible par le premier régulateur de pression 38 : le système de pile à combustible 1 est alors revenu à son état initial.

Les étapes précédentes sont répétées jusqu'à l'arrêt du système de pile à combustible 10.

Grâce à l'invention décrite ci-dessus, les écarts de pression entre les compartiments de la pile à combustible sont mieux maîtrisés. Il est ainsi possible de garantir une bonne durée de vie des membranes 26 des cellules 15 de la pile à combustible 12, tout en limitant les arrêts de sécurité.

## Revendications

1. Procédé de pilotage d'une pile à combustible (12), la pile à combustible (12) comprenant au moins une cellule électrochimique (15) pour la génération d'un courant électrique par réaction d'un fluide oxydant, circulant dans un compartiment cathodique de la pile à combustible (12), avec un fluide réducteur circulant dans un compartiment anodique de la pile à combustible (12), le procédé comprenant les étapes suivantes :
- mesure de la pression de fluide dans un premier compartiment parmi les compartiments anodique et cathodique,
- déduction d'une première pression cible pour la pression de fluide dans le deuxième compartiment, ladite première pression cible étant fonction de la pression de fluide mesurée dans le premier compartiment, et
- stabilisation de la pression de fluide dans le deuxième compartiment à la première pression cible,
**caractérisé en ce que** le procédé comprend en outre les étapes suivantes :
- mesure de la pression de fluide dans le deuxième compartiment,
- déduction d'une deuxième pression cible pour la pression de fluide dans le premier compartiment, ladite deuxième pression cible étant fonction de la pression de fluide mesurée dans le deuxième compartiment, et
- stabilisation de la pression de fluide dans le premier compartiment à la deuxième pression cible.

2. Procédé de pilotage selon la revendication 1, dans lequel la stabilisation de la pression de fluide dans chaque compartiment est effectuée au moyen d'une vanne (38), par exemple d'une électrovanne.

3. Procédé de pilotage selon la revendication 1 ou 2, dans lequel la première pression cible est égale à la somme de la pression de fluide mesurée dans le premier compartiment et d'une première constante, et la deuxième pression cible est égale à la somme de la pression de fluide mesurée dans le deuxième compartiment et d'une deuxième constante.

4. Procédé de pilotage selon l'une quelconque des revendications précédentes, comprenant les étapes suivantes :
- calcul d'une première différence de pression entre la pression de fluide dans le deuxième compartiment et la première pression cible,
- comparaison de la première différence de pression à un premier seuil, et
- en cas de dépassement du premier seuil par la première différence de pression, arrêt de la stabilisation de la pression de fluide dans le deuxième compartiment à la première pression cible, et démarrage de la stabilisation de la pression de fluide dans le premier compartiment à la deuxième pression cible.

5. Procédé de pilotage selon la revendication 4, comprenant les étapes suivantes :
- calcul d'une deuxième différence de pression entre la pression de fluide dans le premier compartiment et la deuxième pression cible,
- comparaison de la deuxième différence de pression à un deuxième seuil, et
- en cas de dépassement du deuxième seuil par la deuxième différence de pression, arrêt de la stabilisation de la pression de fluide dans le premier compartiment à la deuxième pression cible, et démarrage de la stabilisation de la pression de fluide dans le deuxième compartiment à la première pression cible.

6. Système de pile à combustible (10), comprenant :
- un compartiment cathodique,
- un compartiment anodique,
- au moins une cellule électrochimique (15) pour la génération d'un courant électrique par réaction d'un fluide oxydant, circulant dans le compartiment cathodique, avec un fluide réducteur circulant dans le compartiment anodique,
- un premier capteur de pression (34), pour mesurer une pression de fluide dans un premier des compartiments anodique et cathodique,
- un premier régulateur de pression (38), pour réguler une pression de fluide dans le deuxième compartiment,
- un module de commande (40), comprenant :
∘ un premier module de déduction (42), pour déduire une première pression cible à partir de la pression mesurée par le premier capteur (34), et
∘ un premier module de génération (43), pour générer une première loi de commande du premier régulateur (38), adaptée pour stabiliser la pression de fluide dans le deuxième compartiment à la première pression cible,
- un deuxième capteur de pression (36), pour mesurer une pression de fluide le deuxième compartiment, et
- un deuxième régulateur de pression (39), pour réguler la pression de fluide dans le premier compartiment,
**caractérisée en ce que** le module de commande (40) comprend en outre un deuxième module de déduction (52) pour déduire de la pression mesurée par le deuxième capteur (36) une deuxième pression cible, et un deuxième module de génération (53) pour générer une deuxième loi de commande du deuxième régulateur de pression (39), adaptée pour stabiliser la pression de fluide dans le premier compartiment à la deuxième pression cible.

7. Système de pile à combustible (10) selon la revendication 6, dans lequel chaque régulateur de pression (38, 39) est une vanne, par exemple une électrovanne.

8. Système de pile à combustible (10) selon la revendication 6 ou 7, dans lequel la première pression cible est égale à la somme de la pression de fluide mesurée par le premier capteur (34) et d'une première constante, et la deuxième pression cible est égale à la somme de la pression de fluide mesurée par le deuxième capteur (36) et d'une deuxième constante.

9. Système de pile à combustible (10) selon l'une quelconque des revendications 6 à 8, dans lequel le module de commande (40) comprend :
- un premier module de calcul (45) pour calculer une première différence de pression entre la pression de fluide mesurée par le deuxième capteur (36) et la première pression cible,
- un premier module de comparaison (46) pour comparer la première différence de pression à un premier seuil,
- un premier module d'arrêt (48), pour arrêter le premier module de génération (43) en cas de dépassement du premier seuil par la première différence de pression, et
- un premier module de démarrage (49), pour démarrer le deuxième module de génération (53) en cas de dépassement du premier seuil par la première différence de pression.

10. Système de pile à combustible (10) selon la revendication 9, dans lequel le module de commande (40) comprend :
- un deuxième module de calcul (55) pour calculer une deuxième différence de pression entre la pression de fluide mesurée par le premier capteur (34) et la deuxième pression cible,
- un deuxième module de comparaison (56) pour comparer la deuxième différence de pression à un deuxième seuil,
- un deuxième module d'arrêt (58) pour arrêter le deuxième module de génération (53) en cas de dépassement du deuxième seuil par la deuxième différence de pression, et
- un deuxième module de démarrage (59), pour démarrer le premier module de génération (43) en cas de dépassement du deuxième seuil par la deuxième différence de pression.

## Patentansprüche

1. Verfahren zur Steuerung einer Brennstoffzelle (12), wobei die Brennstoffzelle (12) mindestens eine elektrochemische Zelle (15) für die Erzeugung eines elektrischen Stroms durch Reaktion einer Oxydationsflüssigkeit, die in einem Kathodenabteil der Brennstoffzelle (12) zirkuliert, mit einer Reduktionsflüssigkeit, die in einem Anodenabteil der Brennstoffzelle (12) zirkuliert, umfasst, wobei das Verfahren die folgenden Schritte umfasst:
- Messung des Flüssigkeitsdrucks in einem ersten Abteil der Anoden- und Kathodenabteile,
- Ableitung eines ersten Solldrucks für den Flüssigkeitsdruck in dem zweiten Abteil, wobei der besagte erste Solldruck von dem im ersten Abteil gemessenen Flüssigkeitsdruck abhängt, und
- Stabilisierung des Flüssigkeitsdrucks in dem zweiten Abteil auf den ersten Solldruck,
**dadurch gekennzeichnet, dass** das Verfahren des Weiteren die folgenden Schritte umfasst:
- Messung des Flüssigkeitsdrucks in dem zweiten Abteil,
- Ableitung eines zweiten Solldrucks für den Flüssigkeitsdruck in dem ersten Abteil, wobei der besagte zweite Solldruck von dem in dem zweiten Abteil gemessenen Flüssigkeitsdruck abhängt, und
- Stabilisierung des Flüssigkeitsdrucks in dem ersten Abteil auf den zweiten Solldruck.

2. Verfahren zur Steuerung nach Anspruch 1, in welchem die Stabilisierung des Flüssigkeitsdrucks in jedem Abteil anhand eines Ventils (38), zum Beispiel eines Magnetventils, durchgeführt wird.

3. Verfahren zur Steuerung nach Anspruch 1 oder 2, in welchem der erste Solldruck gleich der Summe aus dem im ersten Abteil gemessenen Flüssigkeitsdruck und einer ersten Konstanten ist, und der zweite Solldruck gleich der Summe aus dem im zweiten Abteil gemessenen Flüssigkeitsdruck und einer zweiten Konstanten ist.

4. Verfahren zur Steuerung nach einem der vorstehenden Ansprüche, umfassend die folgenden Schritte:
- Berechnung eines ersten Druckunterschieds zwischen dem Flüssigkeitsdruck in dem zweiten Abteil und dem ersten Solldruck,
- Vergleichen des ersten Druckunterschieds mit einem ersten Schwellenwert, und
- im Falle eines Übersteigens des ersten Schwellenwerts durch den ersten Druckunterschied, Stoppen der Stabilisierung des Flüssigkeitsdrucks in dem zweiten Abteil auf den ersten Solldruck und Starten der Stabilisierung des Flüssigkeitsdrucks in dem ersten Abteil auf den zweiten Solldruck.

5. Verfahren zur Steuerung nach Anspruch 4, umfassend die folgenden Schritte:
- Berechnung eines zweiten Druckunterschieds zwischen dem Flüssigkeitsdruck in dem ersten Abteil und dem zweiten Solldruck,
- Vergleichen des zweiten Druckunterschieds mit einem zweiten Schwellenwert, und
- im Falle eines Übersteigens des zweiten Schwellenwerts durch den zweiten Druckunterschied, Stoppen der Stabilisierung des Flüssigkeitsdrucks in dem ersten Abteil auf den zweiten Solldruck und Starten der Stabilisierung des Flüssigkeitsdrucks in dem zweiten Abteil auf den ersten Solldruck.

6. Brennstoffzellensystem (10), umfassend:
- ein Kathodenabteil,
- ein Anodenabteil,
- mindestens eine elektrochemische Zelle (15) für die Erzeugung eines elektrischen Stroms durch Reaktion einer Oxydationsflüssigkeit, die in dem Kathodenabteil zirkuliert, mit einer Reduktionsflüssigkeit, die in dem Anodenabteil zirkuliert,
- einen ersten Drucksensor (34), um einen Flüssigkeitsdruck in einem ersten der Anoden- und Kathodenabteile zu messen,
- einen ersten Druckregler (38), um einen Flüssigkeitsdruck in dem zweiten Abteil zu regeln,
- ein Befehlsmodul (40), umfassend:
∘ ein erstes Deduktionsmodul (42), um einen ersten Solldruck anhand des durch den ersten Sensor (34) gemessenen Drucks abzuleiten, und
∘ ein erstes Erzeugungsmodul (43), um ein erstes Befehlsgesetz des ersten Reglers (38) zu erzeugen, das geeignet ist, um den Flüssigkeitsdruck in dem zweiten Abteil auf einen ersten Solldruck zu stabilisieren,
- einen zweiten Drucksensor (36), um einen Flüssigkeitsdruck in dem zweiten Abteil zu messen, und
- einen zweiten Druckregler (39), um den Flüssigkeitsdruck in dem ersten Abteil zu regeln,
**dadurch gekennzeichnet, dass** das Befehlsmodul (40) des Weiteren ein zweites Deduktionsmodul (52) umfasst, um von dem durch den zweiten Sensor (36) gemessenen Druck einen zweiten Solldruck abzuleiten, und ein zweites Erzeugungsmodul (53), um ein zweites Befehlsgesetz des zweiten Druckreglers (39) zu erzeugen, das geeignet ist, um den Flüssigkeitsdruck in dem ersten Abteil auf den zweiten Solldruck zu stabilisieren.

7. Brennstoffzellensystem (10) nach Anspruch 6, in welchem jeder Druckregler (38, 39) ein Ventil ist, zum Beispiel ein Magnetventil.

8. Brennstoffzellensystem (10) nach Anspruch 6 oder 7, in welchem der erste Solldruck gleich der Summe aus dem durch den ersten Sensor (34) gemessenen Flüssigkeitsdruck und einer ersten Konstanten ist, und der zweite Solldruck gleich der Summe aus dem durch den zweiten Sensor (36) gemessenen Flüssigkeitsdruck und einer zweiten Konstanten ist.

9. Brennstoffzellensystem (10) nach einem der Ansprüche 6 bis 8, in welchem das Befehlsmodul (40) umfasst:
- ein erstes Berechnungsmodul (45) zur Berechnung eines ersten Druckunterschieds zwischen dem durch den zweiten Sensor (36) gemessenen Flüssigkeitsdruck und dem ersten Solldruck,
- ein erstes Vergleichsmodul (46) zum Vergleichen des ersten Druckunterschieds mit einem ersten Schwellenwert,
- ein erstes Stoppmodul (48) zum Stoppen des ersten Erzeugungsmoduls (43) im Falle eines Übersteigens des ersten Schwellenwerts durch den ersten Druckunterschied, und
- ein erstes Startmodul (49) zum Starten des zweiten Erzeugungsmoduls (53) im Falle eines Übersteigens des ersten Schwellenwerts durch den ersten Druckunterschied.

10. Brennstoffzellensystem (10) nach Anspruch 9, in welchem das Befehlsmodul (40) umfasst:
- ein zweites Berechnungsmodul (55) zur Berechnung eines zweiten Druckunterschieds zwischen dem durch den ersten Sensor (34) gemessenen Flüssigkeitsdruck und dem zweiten Solldruck,
- ein zweites Vergleichsmodul (56) zum Vergleichen des zweiten Druckunterschieds mit einem zweiten Schwellenwert,
- ein zweites Stoppmodul (58) zum Stoppen des zweiten Erzeugungsmoduls (53) im Falle eines Übersteigens des zweiten Schwellenwerts durch den zweiten Druckunterschied, und
- ein zweites Startmodul (59) zum Starten des ersten Erzeugungsmoduls (43) im Falle eines Übersteigens des zweiten Schwellenwerts durch den zweiten Druckunterschied.

## Claims

1. A method for controlling a fuel cell (12), the fuel cell (12) comprising at least one electrochemical cell (15) for generating an electric current by reaction of an oxidizing fluid, flowing in a cathode compartment of the fuel cell (12), with a reducing fluid flowing in an anode compartment of the fuel cell (12), the method comprising the following steps:
- measuring the fluid pressure in a first compartment from the anode and the cathode compartments,
- calculating a first target pressure for the fluid pressure in the second compartment, said first target pressure depending on the fluid pressure measured in the first compartment, and
- stabilizing the fluid pressure in the second compartment at the first target pressure.
**characterized in that** the method further comprises the following steps:
- measuring the fluid pressure in the second compartment,
- calculating a second target pressure for the fluid pressure in the first compartment, said second target pressure depending on the fluid pressure measured in the second compartment, and
- stabilizing the fluid pressure in the first compartment at the second target pressure.

2. The control method according to claim 1, wherein the stabilization of the fluid pressure in each compartment is done using a valve (38), for example a solenoid valve.

3. The control method according to claim 1 or 2, wherein the first target pressure is equal to the sum of the fluid pressure measured in the first compartment and a first constant, and the second target pressure is equal to the sum of the fluid pressure measured in the second compartment and a second constant.

4. The control method according to any one of the preceding claims, comprising the following steps:
- computing a first pressure difference between the fluid pressure in the second compartment and the first target pressure,
- comparing the first pressure difference to a first threshold, and
- if the first pressure difference exceeds the first threshold, stopping the stabilization of the fluid pressure in the second compartment at the first target pressure, and starting the stabilization of the fluid pressure in the first compartment at the second target pressure.

5. The control method according to claim 4, comprising the following steps:
- computing a second pressure difference between the fluid pressure in the first compartment and the second target pressure,
- comparing the second pressure difference to a second threshold, and
- if the second pressure difference exceeds the second threshold, stopping the stabilization of the fluid pressure in the first compartment at the second target pressure, and starting the stabilization of the fluid pressure in the second compartment at the first target pressure.

6. A fuel cell system (10), comprising:
- a cathode compartment,
- an anode compartment,
- at least one electrochemical cell (15) for generating an electric current by reaction of an oxidizing fluid, flowing in the cathode compartment, with a reducing fluid flowing in the anode compartment,
- a first pressure sensor (34), to measure a fluid pressure in a first compartment from the anode and cathode compartments,
- a first pressure regulator (38), to measure a fluid pressure in the second compartment,
- a control module (40), comprising:
∘ a first calculating module (42), to calculate a first target pressure from the pressure measured by the first sensor (34), and
∘ a first generating module (43), to generate a first control law of the first regulator (38), suitable for stabilizing the fluid pressure in the second compartment at the first target pressure,
- a second pressure sensor (36), to measure a fluid pressure in the second compartment, and
- a second pressure regulator (39), to regulate the fluid pressure in the first compartment,
**characterized in that** the control module (40) further comprises a second calculating module (52) to calculate a second target pressure from the pressure measured by the second sensor (36), and a second generating module (53) to generate a second control law of the second pressure regulator (39), suitable for stabilizing the fluid pressure in the first compartment at the second target pressure.

7. The fuel cell system (10) according to claim 6, wherein each pressure regulator (38, 39) is a valve, for example a solenoid valve.

8. The fuel cell system (10) according to claim 6 or 7, wherein the first target pressure is equal to the sum of the fluid pressure measured by the first sensor (34) and a first constant, and the second target pressure is equal to the sum of the fluid pressure measured by the second sensor (36) and a second constant.

9. The fuel cell system (10) according to any one of claims 6 to 8, wherein the control module (40) comprises:
- a first computing module (45) for computing a first pressure difference between the fluid pressure measured by the second sensor (36) and the first target pressure,
- a first comparison module (46) to compare the first pressure difference to a first threshold,
- a first stoppage module (48), to stop the first generating module (43) if the first pressure difference exceeds the first threshold, and
- a first start up module (49), to start the second generating module (53) if the first pressure difference exceeds the first threshold.

10. The fuel cell system (10) according to claim 9, wherein the control module (40) comprises:
- a second computing module (55) for computing a second pressure difference between the fluid pressure measured by the first sensor (34) and the second target pressure,
- a second comparison module (56) to compare the second pressure difference to a second threshold,
- a second stoppage module (58), to stop the second generating module (53) if the second pressure difference exceeds the second threshold, and
- a second start up module (59), to start the first generating module (43) if the second pressure difference exceeds the second threshold.
